# EUROPÄISCHE PATENTSCHRIFT

(11) **EP 0 712 561 B1**
(45) Veröffentlichungstag und Bekanntmachung des Hinweises auf die Patenterteilung: **08.07.1998**
(21) Anmeldenummer: 94922823.3
(22) Anmeldetag: 28.07.1994
(51) Int. Cl.: H04Q 7/24, H04Q 11/04, H04Q 7/30

(54) **LOKALES ISDN-FUNKÜBERTRAGUNGSSYSTEM**
LOCAL ISDN RADIO TRANSMISSION SYSTEM
SYSTEM LOCAL DE RADIOTRANSMISSION A RNIS

(30) Priorität: 05.08.1993 DE 4326749
(43) Veröffentlichungstag der Anmeldung: 22.05.1996
(73) Patentinhaber: KRONE Aktiengesellschaft, 14167 Berlin (DE)
(72) Erfinder: Schiffel, Reinhard, Dr., 10119 Berlin (DE); Jäckel, Klaus, Dr.-Ing., 12623 Berlin (DE); Stadler, Bruno, Dipl.-Ing., 12487 Berlin (DE); Vogel, Holger, Dipl.-Ing., 10365 Berlin (DE)
(86) Internationale Anmeldenummer: DE9400878
(87) Internationale Veröffentlichungsnummer: WO9505053

(56) Entgegenhaltungen:
- WO-A-91/10333
- WO-A-91/18483
- GLOBECOM 91', Bd.2, 4. Dezember 1991, PHOENIX, US Seiten 1474 - 1479 KITAGAWA ET AL. 'An Advanced Air Interface for Integrated Digital Mobile Communications Systems'

## Beschreibung

### Technisches Gebiet

Die Erfindung betrifft ein lokales ISDN-Übertragungssystem, welches als eine lokale Funkzelle, bestehend aus einer zentralen Funkfeststation und einer Vielzahl von Teilnehmerfunkgeräten, organisiert und an die Teilnehmerports (ISDN-Basisanschlüsse) einer Ortsverrnittlungsstelle, Teilvermittlungsstelle oder Nebenstelleneinrichtung angeschlossen ist und Teilnehmern den Zugang zum öffentlichen ISDN-Fernmeldenetz über eine S₀-Schnittsteller durch Einsatz drahtloser Übertragung ermöglicht und bei welchem für den Betrieb des Systems bei einer Teilnehmerzahl größer als die Zahl der genutzten Duplex-Funkkanäle (im folgenden als Nachrichtenkanäle bezeichnet) in einer zentralen Funkfeststation (Basisstation BS) eine Funkvermittlungseinrichtung vorhanden ist, die mittels eines speziellen Funkvermittlungsverfahrens dem Teilnehmerfunkgerät (TL) bei Vorliegen einer Aktivierungsforderung (PH-ACTIVATE REQUEST) einen beliebigen der vorhandenen und freien Nachrichtenkanäle für die Kommunikation zur Verfügung stellt.

### Stand der Technik

Die Erfindung betrifft ein lokales ISDN-Funkübertragungssystemgemäß dem Oberbegriff des Patentanspruchs 1. Es ist als eine lokale Funkzelle organisiert, die aus einer zentralen Funkfeststation (Basisstation BS) und einer Vielzahl von dezentralen Teilnehmerfunkgeräten besteht. Ziel ist, den Funkteilnehmern, die aus unterschiedlichsten Gründen nicht über standardisierte Teilnehmerleitungen an eine Vermittlungseinrichtung angeschlossen werden können oder deren Anschluß in dieser Form nicht zweckmäßig ist, den Zugang zum öffentlichen ISDN-Fernmeldenetz über eine S₀-Schnittstelle durch Einsatz drahtloser Übertragung zu ermöglichen.

Multiusersysteme zum funkgestützten Anschluß von Fernmeldeteilnehmern an die öffentlichen Fernmeldenetze sind vielfältig im Einsatz. Hierbei handelt es sich vor allem um folgende Kategorien:
1 . Mobilfunknetze
   Diese sind vor allem gekennzeichnet durch die Eigenschaften roaming und handover (overload) mit allen daraus resultierenden Konsequenzen für die Netzsteuerung und die Forderung nach Einsatzmöglichkeit der Mobilgeräte bei hohen Geschwindigkeiten von bis zu 200 km/h und den daraus resultierenden Forderungen an die Funkübertragungsverfahren.
2. Chekkernetze
   Diese besitzen wie die Mobilfunknetze die Eigenschaften roaming und handover, sind jedoch bezüglich Teilnehmerspektrum, territorialer Ausdehnung, Funktionalität und insbesondere Zugang zu den öffentlichen Netzen gegenüber den vorgenannten Einschränkungen unterworfen.
3. Netze auf der Basis der Technik schnurloser Telefone
   Diese Netze sollen die Bindung des schnurlosen Telefons an einen bestimmten Hauptanschluß aufheben und durch Einführung eines handover den territorialen Einsatzbereich auf den Bereich einer PABX ausdehnen.
4. DAL (Drahtlose Anschlußleitung)
   Diese sind gekennzeichnet durch den drahtlosen Anschluß stationärer Teilnehmer bei einer teilnehmergleichen Anschaltung des Funkübertragungssystems. Das heißt, daß in der Fernmeldevermittlungfür jeden Funkteilnehmer ein eigener Teilnehmeranschluß vorhanden ist und die Funkübertragungseinrichtung zwischen diese Teilnehmeranschlüsse und die Funkteilnehmer eingefügt ist
5. Rural Networks
   Diese sind dadurch gekennzeichnet, daß sie von einem Zentralknotenamt oder Knotenamt ausgehend eine point to multipoint - Verbindung in territorial weit entfernte Gebiete herstellen, wobei Funkverbindungen genutzt werden. Dabei werden Kanalbündel übertragen, die auf dem Übertragungsweg in mehreren Ebenen gesplittet werden können und zu mehreren Endpunkten übertragen werden. Von diesen Endpunkten ausgehend werden die Teilnehmer meist über Kabelwege angeschaltet, bei Nutzung von Funk erfolgt meist eine kanalgleiche Anschaltung. In den rural networks werden keine Vermittlungsfunktionen ausgeführt

Diese Systeme bieten dem Teilnehmer im allgemeinen einen a/b-Anschluß oder adäquate Funktionen bezüglich Sprachkommunikation und Übertragung von Modem- und Faxsendungen. Teilweise werden auch spezielle Anschlüsse für Datenübertragung (Datenterminals) angeboten. Die Datenraten können dabei bis 64 kbit/s betragen. Diese Systeme sind netzseitig für den Anschluß an das ISDN ausgelegt und reichen zum Teil auch wenige ausgewählte Funktionen des ISDN bis zum Teilnehmer durch. Die Bereitstellung einer nicht eingeschränkten S₀-Schnittstelle gehört jedoch nicht zu den Leistungsmerkmalen dieser Systeme.

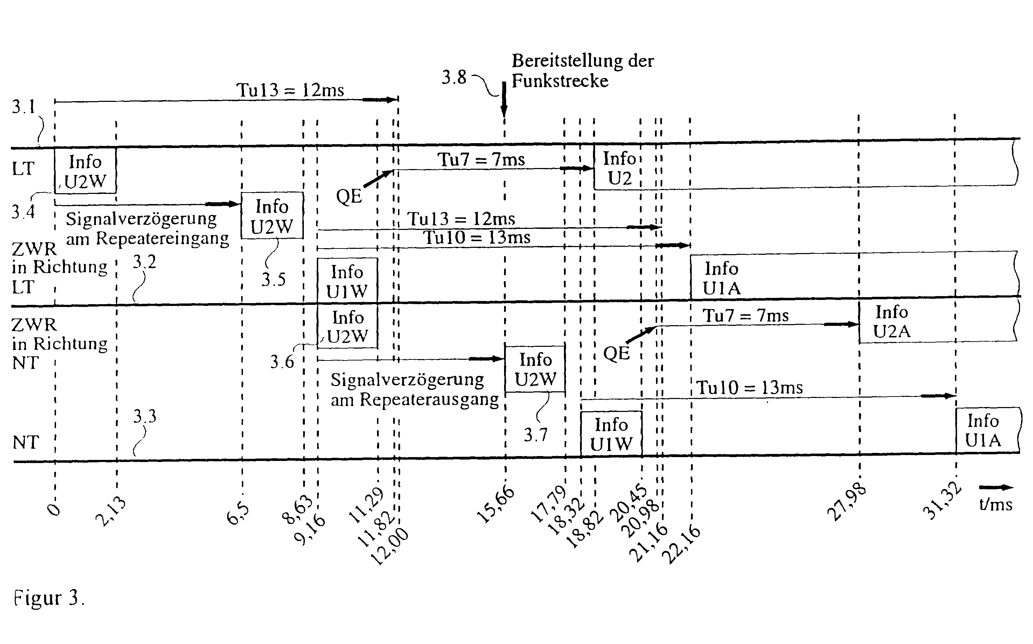

So wird in (1) ein Verfahren beschrieben, um GSM-Teilnehmern den Zugang zu Leistungsmerkmalen des ISDN zu bieten. Das dargestellte Verfahren ist jedoch dadurch begrenzt, daß die ISDN-Teilnehmerebene mit 2B+D (2 x 64kbit/s + 16kbit/s) nicht 1:1 auf die GSM-Teilnehmerebene mit Bm + Dm (13 oder 12 oder 9,6 kbit/s + 1 kbit/s) übertragen werden kann (siehe hierzu (1), Figur 3 und Seite 1, Zeilen 10 bis 19)
Sogenannte DAL-Systeme (**D**rahtlose **A**nschluß**L**eitung) sind bereits vielfältig im Einsatz und haben unter den oben genannten Prämissen ihre Daseinsberechtigung bewiesen. Die bisherigen Systeme bieten dem Funkteilnehmer jedoch nur einen Teilnehmeranschluß mit a/b-Schnittstelle. Beispiele dafür sind die Darstellungen in (2) und (3).

In (4) wird eine Lösung beschrieben, die auf dem DECT-Standard beruht und unter Verwendung eines TDM/TDMA/TDD - Verfahrens den drahtlosen Anschluß von Teilnehmern an PABX oder PSTN ermöglicht. Im System wird eine digitale Übertragung mit 32 kbit/s/Kanal benutzt, wobei jeweils 8 Kanäle mit einem RF-Träger übertragen werden, wozu insgesamt eine Bruttodatenrate von 640 kbit/s erforderlich ist. Dieses System wäre durch Zuweisung mehrerer Kanäle an einen Teilnehmer für die Bereitstellung von S₀-Anschlüssen beim Teilnehmer geeignet, hat aber zwei grundlegende Konsequenzen:
1. Ein TDMA-Rahmen mit einer Dauer von 16 ms ist in 8 Kanalrahmen für die Richtung Basisstation zu den Teilnehmergeräten und 8 Kanalrahmen für die Richtung von den Teilnehmergeräten zur Basisstation unterteilt, woraus für den einzelnen Kanalrahmen eine Dauer von 1 ms folgt.
   Damit sind keine Reserven für den Ausgleich von Laufzeitunterschieden (unterschiedliche Entfernungen von Teilnehmergeräten zur Basisstation) vorhanden und das System ist auf kürzeste Entfernungen von bis zu 300 m beschränkt.
   Zur Quantifizierung dieser Aussagen: Die Realisierung eines Versorgungsbereiches von 30 km Radius erfordert Schutzzeiten von 0,2 ms zwischen den Aussendungen zweier aufeinanderfolgend sendender Teilnehmergeräte.
2. Für die Übertragung von 8 Kanälen im Duplexbetrieb wird eine HF-Bandbreite von 1 MHz belegt, was nur bei den minimalen Reichweiten und damit verbundenen geringen Sendeleistungen von 80 mW akzeptabel ist.

### Kurze Beschreibung der Erfindung.

Die nachfolgend beschriebene Erfindung bietet dem Funkteilnehmer einen Teilnehmeranschluß mit S₀-Schnittstelle, um alle Leistungsmerkmale dieser modernen Kommunikationstechnik nutzen zu können. Neben den oben genannten Prämissen, die die Verwendung von Funkübertragung im Teilnehmerbereich sinnvoll erscheinen lassen, kommt für den ISDN-Teilnehmeranschluß hinzu, daß durch die Funkübertragung Reichweitenbegrenzungen aufgehoben werden, die sich bei leitungsgebundener Übertragung durch Dämpfungsprobleme ergeben. Desweiteren werden durch die Funkübertragung Reichweitenbegrenzungen aufgehoben, die sich aus Laufzeitprobleme ergeben, indem für die Funkübertragung nicht die S₀-Schnittstelle verwendet wird.

Eine konkrete Ausführung der Erfindung wird bezogen auf den ISDN-Zweidraht-Teilnehmeranschluß mit U_{K0}-Interface beschrieben. Die Lösungsprinzipien sind jedoch für alle anderen ISDN-Zweidraht-Teilnehmeranschlüsse mit U-Interfaces gültig, wenn eine Anpassung an die bei diesen benutzten adäquaten Signale erfolgt.

Einzelheiten der Erfindung sind anhand der in den Zeichnungen dargestellten Zusammenhänge näher beschrieben. Es zeigen:
- **Fig. 1**: das Prinzip der Anschaltung von ISDN-Teilnehmern über Funk,
- **Fig. 2**: den Standardablauf der Weckprozedur bei kommendem Ruf,
- **Fig. 3**: den modifizierten Ablauf der Weckprozedur bei kommendem Ruf,
- **Fig. 4**: das Wirkschaltbild der Basisstation eines ISDN-DAL-Systems bei Eingriff in die Weckprozedur entsprechend Figur 3,
- **Fig. 5**: den Standardablauf der Weckprozedur bei kommendem Ruf einschließlich der Darstellung der IOM-Schnittstelle,
- **Fig. 6**: den modifizierten Ablauf der Weckprozedur bei kommendem Ruf einschließlich der Darstellung der IOM-Schnittstelle,
- **Fig. 7**: das Wirkschaltbild der Basisstation eines ISDN-DAL-Systems bei Eingriff in die IOM-Schnittstelle entsprechend Figur 6,
- **Fig. 8**: das Wirkschaltbild eines Teilnehmergerätes eines ISDN-DAL-Systems bei Eingriff in die S₀-Schnittstelle,
- **Fig. 9**: das Wirkschaltbild eines Teilnehmergerätes eines ISDN-DAL-Systems bei Eingriff in die IOM-Schnittstelle, und
- **Fig. 10**: den Datenrahmen für die Funkvermittlung in einem ISDN-DAL-System.

Eine weitere wesentliche Zielstellung der Erfindung ist es, eine hohe Frequenzökonomie des Funkübertragungssystems zu gewährleisten. Diese Forderung hat eine hohe Priorität, da die Nettobitrate des ISDN-Teilnehmeranschlusses mit (B1 + B2 + D) = 144 kbit/s, wie auch immer die Kanalbildung erfolgt, breitbandige Funkkanäle zur Folge hat.

Diese Forderung wird dadurch erfüllt, daß die Anzahl der Funkkanäle wesentlich niedriger als die Zahl der Funkteilnehmer gewählt wird, wobei das Verhältnis variabel gestaltbar sein muß, um eine Anpassung an unterschiedliche Verkehrswerte entsprechend Teilnehmerstruktur zu ermöglichen.

Hierzu wird eine Lösung dahingehend verwendet, bei welcher die ISDN-Zweidraht-Teilnehmeranschlußleitung zwischen Line Termination (LT) in der ISDN-Vermittlung und Network Termination (NT) beim Teilnehmer durch den Einsatz eines Zwischenregenerators (ZWR) in zwei Teilstrecken unterteilt wird und bei der Teilstrecke ZWR - NT die drahtgebundene Übertragung durch eine Funkübertragung ersetzt wird. Dabei sind der ZWR Bestandteil der Basisstation (BS) der lokalen Funkzelle und der NT Bestandteil des Teilnehmerfunkgerätes (TL). Beide sind so integriert, daß bei Vorliegen einer Aktivierungsforderung (PH-ACTIVATE REQUEST) die Zuweisung eines Nachrichtenkanals innerhalb der Karenz- und Überwachungszeiten für die Aktivierung der ISDN-Zweidraht-Teilnehmeranschlußleitung.

### Beste Wege der Ausführung der Erfindung.

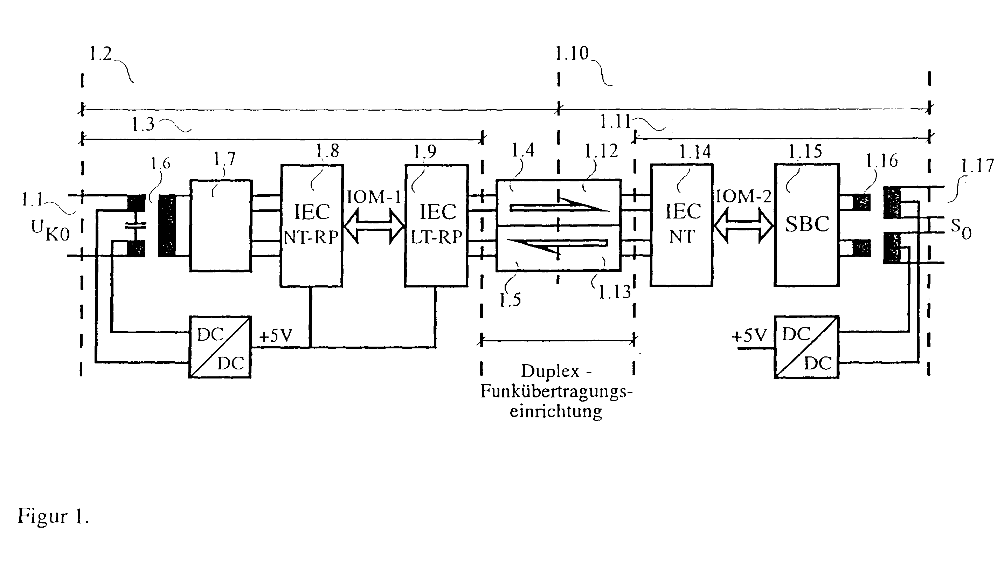

Die Prinzipdarstellung einer derart zu einem Teilnehmer durchgeschalteten Verbindung ist in **Figur 1**. enthalten. Die Darstellung abstrahiert von allen Baugruppen, die an einer durchgeschalteten Funkverbindung funktionell nicht direkt beteiligt sind.

Der von der ISDN-TVSt bereitgestellte U_{K0}-Teilnehmeranschluß **1.1** (siehe **Figur 1**) ist an eine Kanalbaugruppe der Basisstation **1.2** angeschaltet, die aus einem U_{K0}-Repeater (ZWR) **1.3** und der Sendebaugruppe **1.4** und Empfangsbaugruppe **1.5** besteht. Der U_{K0}-Repeater ist herkömmlich mit einem U_{K0}-Übertrager **1.6**, Hybrid **1.7**, und zwei über eine IOM-Schnittstelle verbundenen Schaltkreisen IEC-T **1.8** und **1.9** aufgebaut. Die Ankopplung des U_{K0}-Repeater an die Funkeinrichtung erfolgt unter Weglassung des Hybrid auf getrennten Leitungen für downstream und upstream. Die Funkeinrichtung kann bei Bedarf noch Baugruppen für Codewandlung, Einfügung von Redundanz zur Fehlererkennung und Fehlerkorrektur und kryptographische Behandlung des Signals enthalten.

Das Teilnehmerfunkgerät 1.10 (siehe **Figur 1**) besteht aus der Empfangsbaugruppe **1.12** und Sendebaugruppe **1.13**, die unter Weglassung des Hybrid auf getrennten Leitungen für downstream und upstream an einen Network Termination (NT) **1.11** angekoppelt sind. Der NT ist herkömmlich mit einem Schaltkreis IEC-T im NT-Mode **1.14** und Schaltkreis SBC oder SBCX **1.15,** die über eine IOM-Schnittstelle verbunden sind, und einem S₀-Übertrager **1.16** aufgebaut. Das Teilnehmerfunkgerät stellt an seinem Ausgang eine S₀-Schnittstelle **1.17** bereit.

Eine derartige Realisierung kann ohne zusätzliche Maßnahmen nur als Standverbindung geschaltet werden, was pro Funkteilnehmer einen Funkkanal erforderlich machen würde, jedoch zielstellungsgemäß zu vermeiden war. Für die zielstellungsgemäße Realisierung ist bei jeder Verbindungsanforderung die Zuweisung eines freien Funkkanals (im folgenden immer als Funkvermittlung bezeichnet) erforderlich. Die zur Funkvermittlung erforderliche systeminterne Kommunikation zwischen Kanalbaugruppe der Basisstation und Teilnehmerfunkgerät und Schaltung von Koppelfeldern, Sende- und Empfangsbaugruppen etc. erfordert eine endliche Zeit, die erfindungsgemäß so in die Weckprozedur der U_{K0}-Strecke einzufügen ist, daß die Aktivierung der U_{K0}-Strecke dadurch nicht beeinträchtigt wird und nach der Weckprozedur die Informationsverarbeitung on line erfolgen kann.

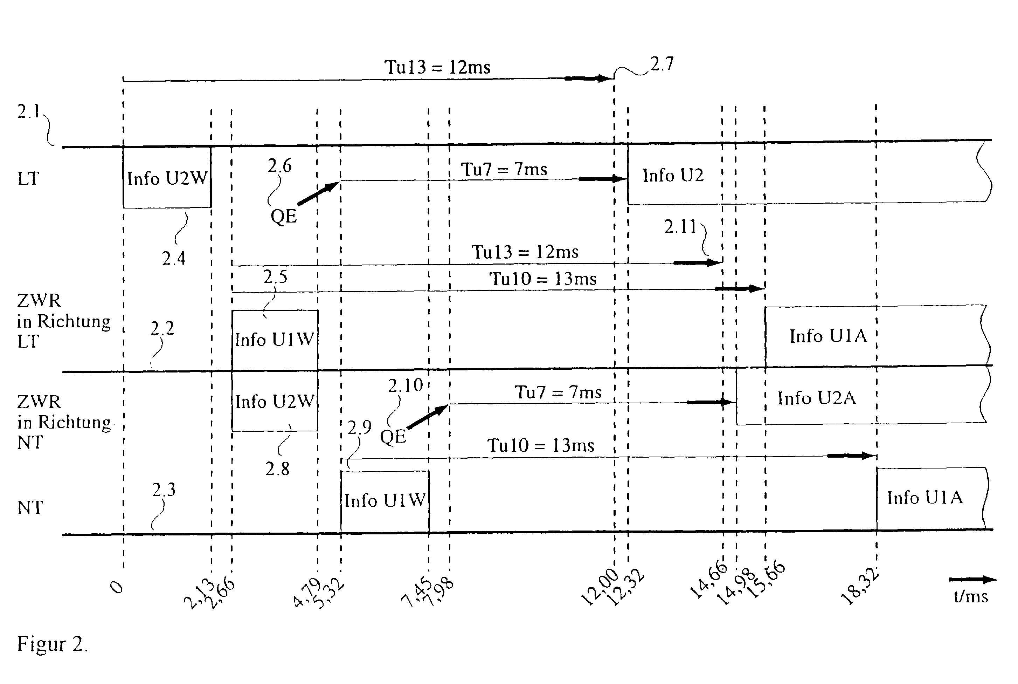

Erfindungsgemäß wird dies bei kommendem Ruf für einen Funkteilnehmer (Aktivierung durch die Fernmeldevermittlung) durch die Verzögerung der Signale INFO U2W erreicht. Ausgangspunkt ist der Standardablauf der Weckprozedur der U_{K0}-Strecke mit ZWR (siehe **Figur 2**). Dieser Ablauf beinhaltet, daß nach PH-ACTIVATE REQUEST vom Line Termination (LT) **2.1** in Richtung zum ZWR **2.2** das Wecksignal INFO U2W **2.4** aussendet, worauf vom ZWR mit INFO U1W **2.5** quittiert wird. Das Standardtiming beinhaltet, daß 5,32 ms nach Beginn der Aussendung von **2.4** im LT die Quittungserkennung QE **2.6** erfolgt. QE **2.6** wird als ordnungsgemäß anerkannt, wenn sie vor Ablauf der Weckwiederholzeit Tu13 = 12 ms **2.7** erfolgt, die mit Beginn der Aussendung von **2.4** im LT gestartet wurde. Dies bedeutet, daß QE **2.6** um maximal 6,68 ms gegenüber dem Standardtiming verzögert werden darf (Karenzzeit), ohne daß eine Störung der Weckprozedur erfolgt. Gleiche Bedingungen wie für die U_{K0}-Teilstrecke LT - ZWR ergeben sich für die U_{K0}-Teilstrecke ZWR - NT **2.3.** Parallel zur Aussendung der Quittung **2.5** an den LT sendet der ZWR an den NT den Weckruf INFO U2W **2.8** und startet gleichzeitig die Weckwiederholzeit Tu13 = 12 ms **2.11.** Somit können auch auf der zweiten U_{K0}-Teilstrecke ZWR - NT die Quittung INFO U1W **2.9** des NT und QE **2.10** im ZWR um maximal 6,68 ms gegenüber dem Standardtiming verzögert werden (Karenzzeit), ohne daß eine Störung der Aktivierung der U_{K0}-Strecke erfolgt. Beide Karenzzeiten können unabhängig voneinander oder auch gemeinsam genutzt werden.

Durch Nutzung der Karenzzeiten der Weckprozedur ergibt sich der Ablauf der Aktivierung der U_{K0}-Strecke entsprechend **Figur 3**. Die vom LT 3.1 (siehe **Figur 3**) ausgesandte INFO U2W **3.4** wird durch eine geeignete Einrichtung verzögert an den LT-seitigen Eingang des ZWR **3.2** übergeben und die vom ZWR generierte INFO U2W **3.6** wird durch eine geeignete Einrichtung verzögert auf die zweite U_{K0}-Teilstrecke ausgesandt. Zum Zeitpunkt **3.8** des Beginns dieser Aussendung muß die Funkvermittlung abgeschlossen sein, damit **3.6** an den NT **3.3** übertragen werden kann und die Aktivierung der U_{K0}-Strecke ordnungsgemäß fortgesetzt werden kann.

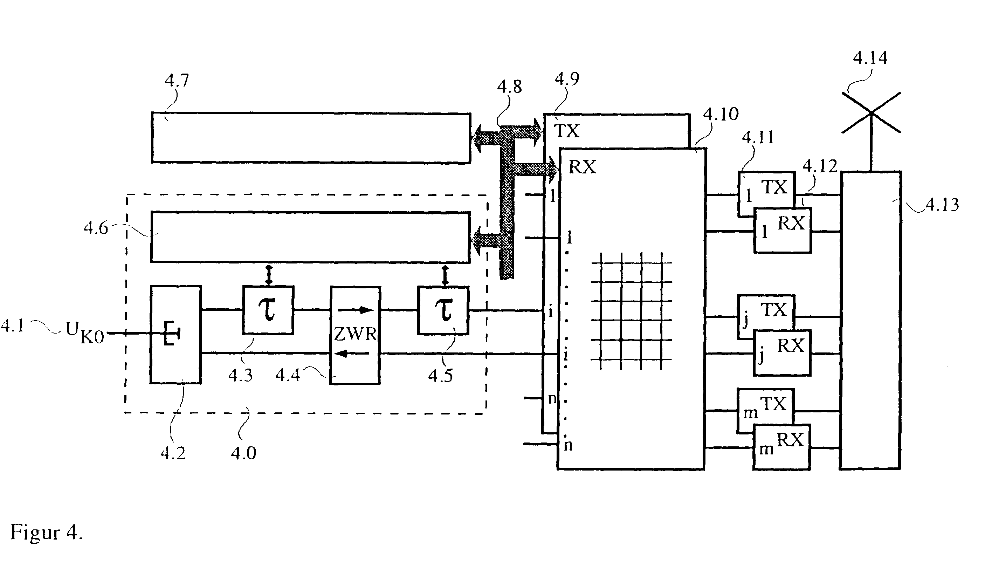

Realisiert werden diese Funktionen in der Basisstation durch Kanalbaugruppen **4.0** (siehe **Figur 4**), die jedem U_{K0}-Teilnehmeranschluß **4.1** zugeordnet sind. Das ankommende Leitungssignal wird in einer Gabelschaltung **4.2** in down- und upstream getrennt. In die downstream-Leitung sind am Eingang und Ausgang des ZWR **4.4** je eine Verzögerungseinrichtung **4.3** und **4.5** eingefügt, die durch den Kanalcontroller **4.6** gesteuert werden. Die Verzögerungseinrichtungen **4.3** und **4.5** stellen im deaktivierten Zustand der U_{K0}-Strecke eine Unterbrechung des Leitungszuges dar. Ein auf der up-Seite der Verzögerungseinrichtung **4.3** eingehendes Wecksignal wird vom Kanalcontroller **4.6** erkannt, der daraufhin den Prozeß der Funkvermittlung einleitet und nach der maximal zulässigen Verzögerungszeit bzw. nach Abschluß der Funkvermittlung das gleiche Wecksignal auf der down-Seite der Verzögerungseinrichtung wieder einspeist und anschließend die Trennung des Leitungszuges aufhebt (siehe hierzu auch **Figur 3** und zu Figur 3 gehörige Beschreibung). Sofern nach der maximal zulässigen Verzögerungszeit der Verzögerungseinrichtung **4.3** die Funkvermittlung noch nicht abgeschlossen ist, kann der gleiche Vorgang an der Verzögerungseinrichtung **4.5** wiederholt werden. Die Basisstation wird in einer von der Mobiltelefontechnik bekannten Weise komplettiert durch einen Funkvermittlungsrechner **4.7,** welcher über einen zentralen Bus **4.8** alle Kanalbaugruppen **4.0** und die Koppelfelder für die Senderichtung **4.9** und für die Empfangsrichtung **4.10** steuert. An die Koppelfeldbaugruppen sind Sendebaugruppen **4.11** und Empfangsbaugruppen **4.12** angeschaltet, die über ein Koppelnetzwerk **4.13** auf eine gemeinsame Antenne **4.14** arbeiten.

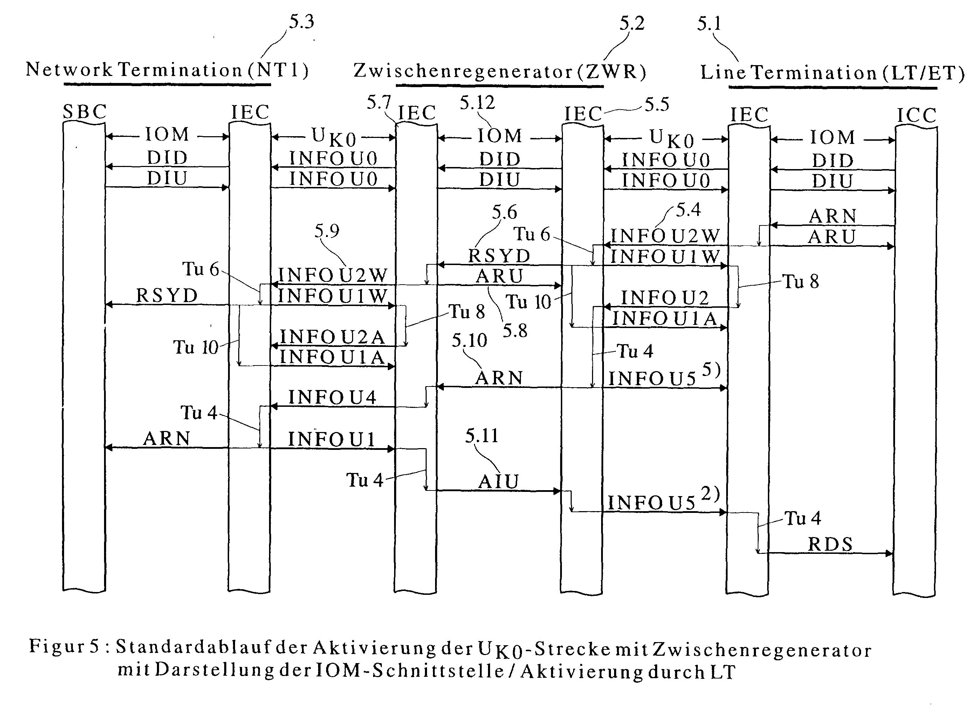

Erfindungsgemäß wird in einer anderen Lösungsvariante bei kommendem Ruf für einen Funkteilnehmer (Aktivierung durch die Fernmeldevermittlung) die erforderliche Zeit für die Funkvermittlung durch die verzögerte Übertragung der Aktivierungsanforderung zwischen LT-seitigem Eingangs- und teilnehmerseitigem Ausgangskreis des ZWR gewonnen.Hierzu ist zunächst der Standardablauf der Aktivierung der U_{K0}-Strecke mit ZWR wie in **Figur 5** dargestellt zu betrachten. Dieser Ablaufbeinhaltet, daß nach Eingang einer INFO U2W **5.4** vom Line Termination **5.1** der Eingangskreis **5.5** des ZWR **5.2** die Info RSYD **5.6** an den Ausgangskreis **5.7** sendet. Der Ausgangskreis **5.7** quittiert mit der Info ARU **5.8** und leitet mit Aussendung von Info U2W **5.9** die Aktivierung der zweiten Teilstrecke vom ZWR **5.2** zum NT **5.3** ein. Der Austausch der Signale ARN **5.10** und AIU **5.11** über die IOM-Schnittstelle des ZWR **5.12** schließt die Aktivierung ab.

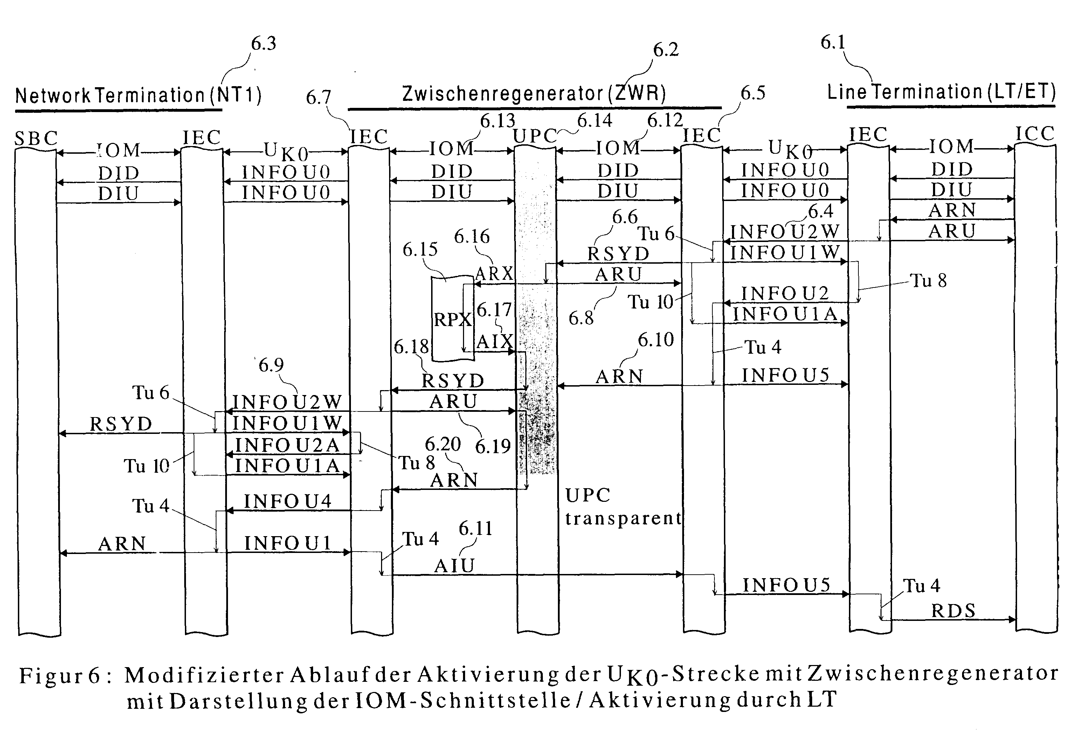

Zur Realisierung der Erfindung wird entsprechend Darstellung in **Figur 6** in die IOM-Schnittstelle ein Schnittstellenprozessor UPC **6.14** eingefügt und die IOM-Schnittstelle damit in zwei Teilstrecken **6.12** und **6.13** geteilt. Nach Eingang einer INFO U2W **6.4** vom Line Termination **6.1** sendet der Eingangskreis **6.5** des ZWR **6.2** die Info RSYD **6.6** aus, die vom UPC **6.14** empfangen wird. Der UPC **6.14** quittiert mit dem Signal ARU **6.8** und sendet an die Funkvermittlungseinrichtung RPX **6.15** die Aktivierungsanweisung ARX **6.16.** Von der RPX **6.15** wird nach Herstellen der Funkverbindung zum gewünsckten Teilnehmerfunkgerät die Aktivierungsquittung AIX **6.17** an den UPC **6.14** gesandt. Erst danach wird vom UPC **6.14** das Signal RSYD **6.18** verzögert an den Ausgangskreis **6.7** des ZWR **6.2** gesendet. Der Ausgangskreis **6.7** des ZWR **6.2** quittiert mit der Info ARU **6.19** und aktiviert nunmehr durch Aussenden der INFO U2W **6.9** die zweite Teilstrecke vom ZWR **6.2** zum NT **6.3.** Dieser Vorgang läuft über die bereits aktivierte Funkverbindung zum gewünschten Teilnehmergerät. Nach Empfang der Info ARU **6.19** wird vom UPC **6.14** auch die Info ARN **6.20** verzögert an den Ausgangskreis **6.7** des ZWR **6.2** gesendet. Ab diesem Zeitpunkt wird vom UPC **6.14** die Verbindung zwischen Eingangskreis **6.5** und Ausgangskreis **6.7** des ZWR **6.2** transparent geschaltet und alle nachfolgenden Signale ohne Veränderung oder Verzögerung übertragen.

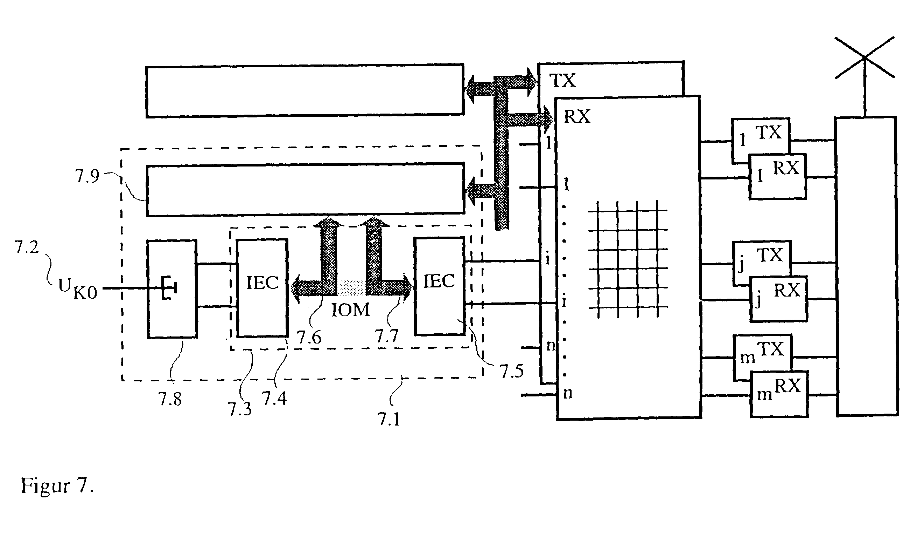

Diese erfindungsgemäße Variante wird ebenfalls in der Basisstation durch Kanalbaugruppen **7.1** (siehe **Figur 7**), die jedem U_{K0}-Teilnehmeranschluß **7.2** zugeordnet sind, realisiert. Wesentliches Merkmal ist, daß im ZWR **7.3** der IOM-Bus zwischen den Schaltkreisen IEC **7.4** und IEC **7.5** ganz oder teilweise unterbrochen ist und der Teilbus **7.6** des IEC **7.4** sowie der Teilbus **7.7** des IEC **7.5** jeweils mit dem Kanalcontroller / RPX **7.9** verbunden sind. Das vom LT ankommende Leitungssignal wird in einer Gabelschaltung **7.8** in down- und upstream getrennt und diese direkt an den IEC **7.4** angeschaltet. Nach Vorliegen einer Aktivierungsforderung des LT (INFO U2W) wird die vom IEC **7.4** über die IOM-Schnittstelle **7.6** ausgesandte Aktivierungsanforderung vom Kanalcontroller / RPX **7.9** erkannt, der daraufhin den Prozeß der Funkvermittlung einleitet (siehe hierzu auch **Figur 6** und zu Figur 6 gehörige Beschreibung). Nach erfolgreicher Funkvermittlung wird vom Kanalcontroller über die IOM-Schnittstelle **7.7** die Aktivierungsanforderung für die zweite U_{K0}-Teilstrecke an den IEC **7.5** übergeben. Die Basisstation wird in einer von der Mobiltelefontechnik bekannten Weise und identisch zu der Darstellung in **Figur 4** und zugehörigen Beschreibung komplettiert.

Erfindungsgemäß wird bei gehendem Ruf eines Funkteilnehmers (Aktivierungsanforderung durch ein Endgerät) die Zeit für die Funkvermittlung durch die Verzögerung des Signals INFO S1 erreicht. Ausgangspunkt ist der Standardablauf der Weckprozedur der S₀-Strecke, der für die Aussendung der Quittung INFO S2 durch den NT nach Erkennen der INFO S1 kein Zeitlimit vorschreibt (ausgenommen die Gesamtüberwachungszeit Tsl = 30 ... 35 s für Abschluß der Aktivierung im TE mit PH-ACTIVATE INDICATION).

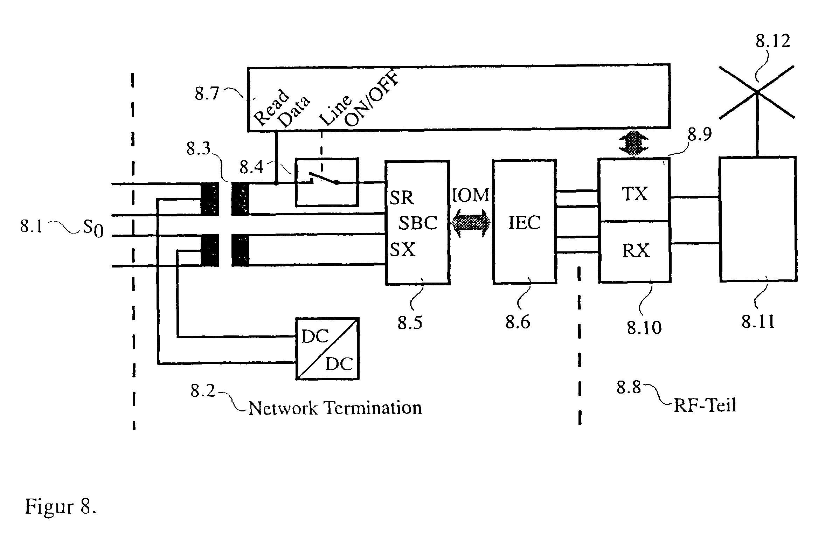

Die Realisierung erfolgt im Teilnehmerfunkgerät (siehe **Figur 8**), indem im NT **8.2** zwischen S₀-Übertrager **8.3** und Schaltkeis SBC (SBCX) **8.5** im upstream-Zweig ein Schalterelement **8.4** angeordnet ist, das vom Linkcontroller **8.7** über eine Steuerleitung geschaltet werden kann. Der Linkcontroller **8.7** ist zwischen S₀-Übertrager **8.3** und Schalterelement **8.4** mit dem upstream-Zweig verbunden. Das Schalterelement **8.4** stellt im deaktivierten Zustand der S₀-Strecke eine Unterbrechung des Leitungszuges dar. Ein auf der down-Seite des Schalterelementes **8.4** eingehendes Signal INFO S1 wird vom Linkcontroller **8.7** detektiert, der daraufhin den Prozeß der Funkvermittlung einleitet und nach Abschluß der Funkvermittlung das Schalterelement **8.4** auf "ON" schaltet, womit INFO S1 am NT anliegt und die Aktivierung des ISDN-Teilnehmeranschlusses einleitet.

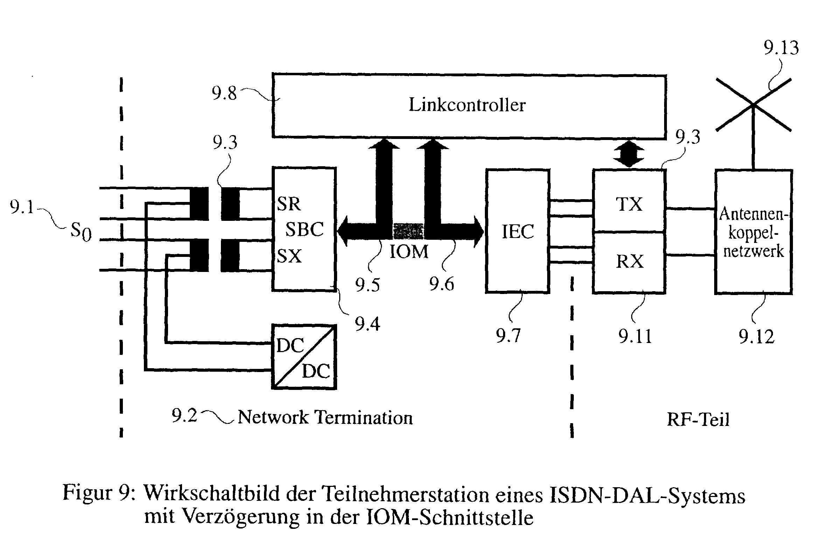

In einer anderen erfindungsgemäßen Variante wird die gleiche Aufgabe ebenfalls im Teilnehmerfunkgerät (siehe **Figur 9**) gelöst. Wesentliches Merkmal ist, daß im NT **9.2** der IOM-Bus zwischen den Schaltkreisen SBC (SBCX) **9.4** und IEC **9.7** ganz oder teilweise unterbrochen ist und der Teilbus **9.5** des SBC **9.4** sowie der Teilbus **9.6** des IEC **9.7** jeweils mit dem Linkcontroller **9.8** verbunden sind. Das S₀-Signal **9.1** wird über einen S₀-Übertrager **9.3** an den Schaltkreis SBC (SBCX) **9.4** des NT **9.2** angeschaltet. Nach Vorliegen einer Aktivierungsforderung eines TE (INFO S1) wird die vom SBC (SBCX) **9.4** über die IOM-Schnittstelle **9.5** ausgesandte Aktivierungsanforderung vom Linkcontroller **9.8** erkannt, der daraufhin den Prozeß der Funkvermittlung einleitet. Nach erfolgreicher Funkvermittlung wird vom Linkcontroller über die IOM-Schnittstelle **9.6** die Aktivierungsanforderung an den Schaltkreis IEC **9.7** übergeben, womit die Aktivierung des ISDN-Teilnehmeranschlusses eingeleitet wird.

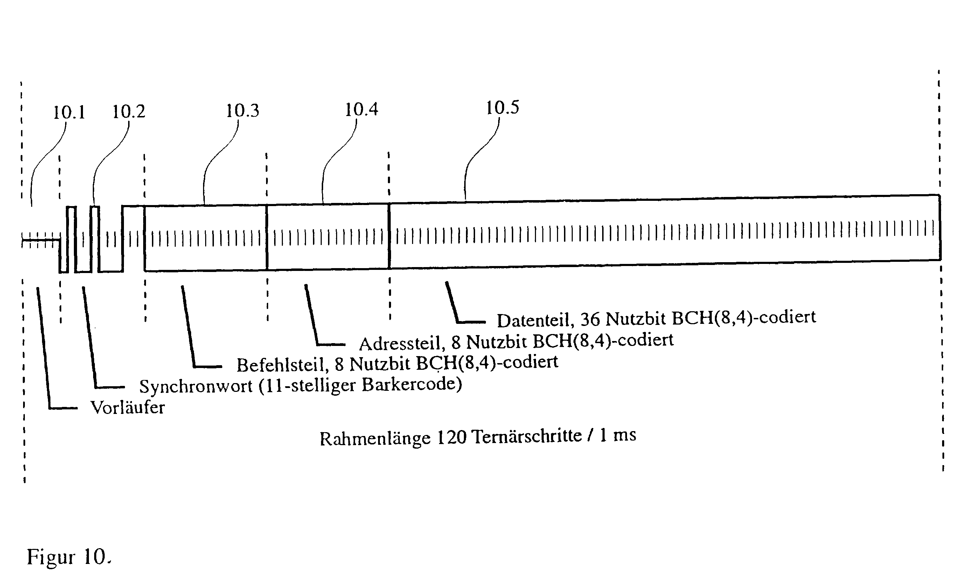

Um eine möglichst effektive Ausnutzung der zur Verfügung stehenden Übertragungsbandbreite zu erreichen, wird entsprechend Anspruch 7 auf einen eigenständigen Funkkanal für Steuerungs-, Organisations- und Kontrollzwecke verzichtet. Alle hierzu erforderlichen Befehle und Informationen werden in den freien Funkkanälen übertragen. Zur Aufwandssenkung werden Datenrate, Blocklänge und Synchronworte hierfür identisch zum jeweiligen U-Schnittstellenstandard gewählt. Um zu ermöglichen, daß im Teilnehmerfunkgerät ein Funkkanal als frei erkannt werden kann, werden dabei die Synchronworte revers (Anfang und Ende vertauscht) in die Übertragung eingefügt, wodurch deutlich unterscheidbar ist, ob Funkvermittlungsbetrieb oder ISDN-Übertragung vorliegt. Ein Datenrahmen entsprechend diesen Vorgaben ist in **Figur 10** dargestellt. Der Datenrahmen beginnt mit 5 Ternärschritten "0" als Vorläufer **10.1.** Diesem folgen 11 Ternärschritte Synchronwort **10.2.** Als Synchronwort wird ein elfstelliger Barkercode benutzt, welcher in der Richtung von der BS zum Funkteilnehmer in der Form
- + - - + - - - + + +
übertragen wird. In der Richtung Vom Funkteilnehmer erfolgt die Übertragung in der Form
+ + + - - - + - - + -

Bei der ISDN-Übertragung sind die Barkercodes jeweils vertauscht in die Datenströme eingefügt. Die Polarität ist dabei nicht von Bedeutung, da die Empfangskreise eine automatische Polaritätserkennung beinhalten. Es folgen 16 Ternärschritte Befehlsteil **10.3,** die bei BCH(8,4)-Codierung 8 Nutzbits gleich 256 Befehle enthalten können. Es folgen weiter 16 Ternärschritte Adressteil **10.4**, die bei BCH(8,4)-Codierung 8 Nutzbits gleich 256 Adressen enthalten können. Die restlichen 72 Ternärschritte **10.5** werden als Datenteil verwendet und können von gleichen Voraussetzungen wie bei **10.3** und **10.4** ausgehend 36 Nutzbits übertragen. Hierin können als Beispiel die frei/belegt-Meldungen für 36 Kanäle als 1 bit-Information enthalten sein.

Aus funkvermittlungstechnischer Sicht ist es sinnvoll, die nicht aktiven Teilnehmerfunkgeräte gleichmäßig auf die freien Funkkanäle zu verteilen, um bei gewünschtem Verbindungsaufbau möglichst wenig Schaltvorgänge zu haben und die Wahrscheinlichkeit eines zufälligen Signalhazards zu reduzieren. Diese Aufgabe wird dadurch gelöst, daß die Teilnehmerfunkgeräte einen Zufallsgenerator besitzen, der vor jedem Kanalwechsel eine gleichverteilte IntegerRandomzahl bestimmt, die beispielsweise je nach Systemgröße zwischen 1 und 16 liegen kann, und die angibt, der wievielte freie Kanal bei zyklischer Abtastung zu benutzen ist.

Die Kanalwechsel werden von den Teilnehmerfunkgeräten automatisch in variablen Zeitabständen durchgeführt, desweiteren auf Weisung der Funkvermittlungseinrichtung oder, wenn der aktuell benutzte Kanal einem anderen Teilnehmerfunkgerät zur aktiven Nutzung zugewiesen wird.

Bei kommendem Ruf erfolgt die Zuweisung eines freien Funkkanals an den Teilnehmer entsprechend Anspruch 8 dadurch, daß die Funkvermittlungseinrichtung eine adressierte Abfrage in allen freien Funkkanälen aussendet. Dies ist erforderlich, wenn in der Funkvermittlungseinrichtung keine a-priori-Kenntnis über den vom Teilnehmerfunkgerät aktuell belegten Funkkanal vorhanden ist.

Wird diese Abfrage durch das entsprechende Teilnehmerfunkgerät erkannt, erfolgt die Aussendung einer Quittung, die die Funkvermittlungseinrichtung veranlaßt, den momentan vom Teilnehmerfunkgerät benutzten Funkkanal diesem zuzuweisen und für die aktive ISDMInformationsübertragung zum gerufenen Teilnehmer durchzuschalten, so daß keine weiteren Zeitverluste infolge Kanalwechsels u.a. auftreten. Lediglich auf Grund von zeitparallelen Prozessen oder Signalhazards könnte es zu Abweichungen von dieser vorgesehenen Prozedur kommen, wobei eine Entflechtung dadurch erfolgt, daß nach Zuweisung eines Funkkanals an ein bestimmtes Teilnehmerfunkgerät alle anderen Teilnehmerfunkgeräte diesen Funkkanal verlassen.

Abfrage und Quittungsaussendung werden durch die Funkvermittlungseinrichtung zentral nach dem Master-Slave-Prinzip gesteuert.

Bei Wahlwunsch eines Teilnehmers (gehender Ruf) wird eine entsprechende Anforderung durch das Teilnehmerfunkgerät im momentan benutzten freien Funkkanal durchgeführt. Bei erfolgreicher Erkennung dieses Wahlwunsches wird gemäß Anspruch 9 dieser Funkkanal von der BS dem Teilnehmerfunkgerät zur aktiven ISDN-Informationsübertragung freigegeben. Ablauf und Einschränkungen dieser Verfahrensweise sind wie oben beschrieben. Um zeitlich definierte Reaktionen der Teilnehmerfunkgeräte zu erhalten, werden durch die Funkvermittlung Freirufe ausgesendet, auf die eine Wahlwunschanmeldung eines Teilnehmerfunkgerätes erfolgen darf. Erhält dabei ein Teilnehmerfunkgerät nach erfolgter Wahlwunschaussendung nicht den entsprechenden Funkkanal zugewiesen, wird entsprechend Anspruch 10 im Teilnehmerfunkgerät eine gleichverteilte Integer-Randomzahl erzeugt, die angibt, der wievielte folgende Freiruf der Funkvermittlung für eine erneute Wahlwunschübertragung zu nutzen ist, und dementsprechend die Wahlwunschanmeldung wiederholt.

Diese Verfahrensweise sichert, daß aufgrund eines möglichen Signalhazards durch gleichzeitige Wahlwunschanmeldung mehrerer Teilnehmer eine zeitliche Entflechtung der einzelnen Teilnehmeranmeldungen erfolgt.

Tritt eine Überschneidung von Anforderungen bezüglich kommendem und gehendem Verkehr für zwei verschiedene Teilnehmerfunkgeräte innerhalb eines Funkkanals auf, so führt dies nicht zu Verkehrshazards, da in diesem Falle einem der betroffenen Teilnehmerfunkgeräte ein anderer, freier Funkkanal zugewiesen wird (siehe Anspruch 11). Die Prozedur des Wechsels in einen anderen freien Kanal kann insbesondere bei relativ hohem Verkehrsaufkommen und bei relativ großen Kanalzahlen zu Verlusten dahingehend führen, daß die Teilnehmerfunkgeräte eine nicht zu vernachlässigende Zeitdauer für die Suche nach freien Funkkanälen benötigen, wenn die Suchprozedur das Abscannen aller vorhandenen Funkkanäle beinhaltet.

Um dem vorzubeugen, werden durch die Funkvermittlung ständig aktuelle Informationen über freie Kanäle übertragen. Dadurch können die Teilnehmerfunkgeräte bei einem erforderlichen Funkkanalwechsel ohne Suchlauf den neuen Zielkanal bestimmen, und damit nachrichtetechnische Verluste reduzieren.
(1) PCT/EP91/00853 (International Publication Number WO 91/18483)
(2) Mandel, Günter; Kercher, Klaus: DAL in analog-zellularer Technik
   Nachrichtentechnik, Elektronik, Berlin 42 (1992) 4
(3) Leipold, Peter: DAL - Funktechnik im Teilnehmeranschlußbereich
   NTZ 45(1992)4
(4) Buckingham, Colin; Wolterink, Gé Klein; Akerberg, Dag: A Bussiness Cordless PABX Telephone System on 800 MHz Based on the DECT Technology
   IEEE Communications Magazine, January 1991

Die nachfolgenden Abkürzungen sind Begriffe aus Anwenderunterlagen, Typenbezeichnungen und geschützte Markenzeichen der Fa. Siemens:
- IOM: **I**SDN **O**riented **M**odular Interface
- IOM-1: **I**SDN **O**riented **M**odular Interface Version **1**
- IOM-2: **I**SDN **O**riented **M**odular Interface Version **2**
- RSYD: **R**esynchronizing Indication **D**ownstream
- ARU: **A**ctivation **R**equest **U**pstream
- ARN: **A**ctivation **R**equest **n**o Loop
- AIU: **A**ctivation **I**ndication **U**pstream
- IEC: **I**SDN **E**chocancellation **C**ircuit
- IEC-T: **I**SDN **E**chocancellation **C**ircuit
- IEC TD: **I**SDN **E**chocancellation **C**ircuit / **D**igital Circuit
- IEC-TA: **I**SDN **E**chocancellation **C**ircuit / **A**nalog Circuit
- SBC: **S**-**B**us Interface **C**ircuit
- SBCX: **S**-**B**us Interface **C**ircuit, Extended

### Gewerbliche Auswertbarkeit

Die Erfindung ist in der Telekommunikationsindustrie gewerblich auswertbar.

## Patentansprüche

1. Lokales ISDN-Übertragungssystem, welches als eine lokale Funkzelle,
bestehend aus einer zentralen Funkfeststation und einer Vielzahl von dezentralen Teilnehmerfunkggeräten,
organisiert ist und
an die Teilnehmerports (ISDN-Basisanschlüsse) einer
Ortsvermittlungsstelle,
Teilvermittlungsstelle oder
Nebenstelleneinrichtung
angeschlossen ist
und den Teilnehmern den Zugang zum öffentlichen ISDN-Fernmeldenetz über eine S₀-Schnittstelle durch Einsatz drahtloser Übertragung ermöglicht,
und bei welchem für den Betrieb des Systems bei einer Teilnehmerzahl größer als die Zahl der genutzten Duplex-Funkkanäle (im weiteren als Nachrichtenkanäle bezeichnet) in einer zentralen Funkfeststation (Basisstation BS) eine Funkvermittlungseinrichtung vorhanden ist, die mittels eines speziellen Funkvermittlungsverfahrens dem Teilnehmerfunkgerät (TL) bei Vorliegen einer Aktivierungsforderung (PH-ACTIVATE REQUEST) einen beliebigen der vorhandenen und freien Nachrichtenkanäle für die Kommunikation zur Verfügung stellt,
dadurch gekennzeichnet,
daß die Netto-Bitrate (B1 + B2 + D) des ISDN-Teilnehmeranschlusses uneingeschränkt über die Funkstrecke übertragen wird und die S₀-Schnittstelle eine nicht eingeschränkte Schnittstelle darstellt,
daß die ISDN-Zweidraht-Teilnehmeranschlußleitung zwischen Line Termination (LT) in der ISDN-Vermittlung und Network Termination (NT) beim Teilnehmer durch den Einsatz eines Zwischenregenerators (ZWR) in zwei Teilstrecken unterteilt wird
und bei der Teilstrecke ZWR - NT die drahtgebundene Übertragung durch eine Funkübertragung ersetzt wird,
wobei der Zwischenregenerator (ZWR) Bestandteil der Basisstation (BS) der lokalen Funkzelle und des Network Termination (NT) Bestandteil des Teilnehmerfunkgerätes (TL) sind und beide so integriert sind,
daß bei Vorliegen einer Aktivierungsforderung (PH-ACTIVATE REQUEST) die Zuweisung eines Nachrichtenkanals innerhalb der Karenz- und Überwachungszeiten für die Aktivierung der ISDN-Zweidraht-Teinehmeranschlußleitung erfolgt,
und daß eine Einrichtung vorgesehen ist, die bei Vorliegen einer Aktivierungsforderung deren Weitergabe um eine Verzögerungszeit verzögert, die es ermöglicht, einen Nachrichtenkanal für den gerufenen Teilnehmer zu schalten und Funkeinrichtungen des Teilnehmerfunkgerätes (TL) zu aktivieren.

2. Lokales ISDN-Übertragungssystem nach Anspruch 1,
dadurch gekennzeichnet,
daß in der Basisstation (BS) für den Aufbau einer Funkverbindung bei kommendem Ruf für einen Funkteilnehmer am vermittlungsseitigen (LT-seitigen) Eingang des Zwischengenerators (ZWR) (4.3, Fig. 4) eine Einrichtung (4.3, Fig. 4) vorhanden ist, die den von der Vermittlungsstelle in Richtung des Zwischengenerators (ZWR) ausgehenden Weckruf(3.4, Fig. 3) verzögert und/oder am teilnehmerseitigen (NT-seitigen) Ausgang des Zwischengenerators (ZWR) eine Einrichtung (4.5, Fig. 4) vorhanden ist, die den vom Zwischengenerator (ZWR) (4.4, Fig. 4) in Richtung NT ausgehenden Weckruf (3.6, Fig. 4) verzögert, und daß diese Verzögerungszeiten jeweils für sich allein oder in Summe genutzt werden, um einen Nachrichtenkanal für den gerufenen Teilnehmer zu schalten und die Funkeinrichtungen des Teilnehmerfunkgerätes (TL) zu aktivieren.

3. Lokales ISDN-Übertragungssystem nach Anspruch 1,
dadurch gekennzeichnet,
daß in einer anderen Variante in der Basisstation (BS) für den Aufbau einer Funkverbindung bei kommendem Ruf für einen Funkteilnehmer in die Übergabeschnittstelle zwischen LT-seitigem Eingangs- (5.5/6.5) und teilnehmerseitigem Ausgangskreis (5.7/6.7) des Zwischengenerators (ZWR) (5.2/6.2) eine Einrichtung (6.14) eingefügt ist, die die Übergabe der Aktivierungsforderung (6.6) an den Ausgangskreis (6.7) verzögert und daß diese Verzögerungszeit genutzt wird, um einen Nachrichtenkanal für den gerufenen Teilnehmer zu schalten und die Funkeinrichtungen des Teilnehmerfunkgerätes zu aktivieren.

4. Lokales ISDN-Übertragungssystem nach Anspruch 1,
dadurch gekennzeichnet,
daß für den Aufbau einer Funkverbindung bei gehendem Ruf eines Funkteilnehmers im Teilnehmerfunkgerät am teilnehmerseitigen S₀-Anschluß ( 8.1) des Network-Termination (NT) (8.2) eine Einrichtung vorhanden ist, die die Aktivierungsanforderung (INFOSI) eines angeschlossenen Endgerätes verzögert und daß diese Verzögerungszeit genutzt wird, um einen Nachrichtenkanal für den gerufenen Teilnehmer zu schalten und die Funkeinrichtungen (8.8) des Teilnehmerfunkgerätes (TL) zu aktivieren.

5. Lokales ISDN-Übertragungssystem nach Anspruch 1,
dadurch gekennzeichnet,
daß in einer anderen Variante für den Aufbau einer Funkverbindung bei gehendem Ruf eines Funkteilnehmers im Teilnehmerfunkgerät in die Übergabeschnittstelle zwischen teilnehmerseitigem Eingangskreis (9.4) und vermittlungsseitigem Ausgangskreis (9.7) des Network-Termination (NT) (9.2) eine Einrichtung (9.8) eingefügt ist, die die Übergabe der Aktivierungsanforderung eines angeschlossenen Endgerätes verzögert, und daß diese Verzögerungszeit genutzt wird, um einen Nachrichtenkanal für den gerufenen Teilnehmer zu schalten und die Funkeinrichtungen (9.9) des Teilnehmerfunkgerätes zu aktivieren.

6. Lokales ISDN-Übertragungssystem nach Anspruch 1, 2, 3, 4 und 5,
dadurch gekennzeichnet,
daß die Funkübertragungseinrichtung nach der verzögerten Übertragung der Aktivierungsanforderungen transparent und on line in den Übertragungsweg zwischen Vermittlung und Endgerät des Teilnehmers eingeschaltet ist.

7. Lokales ISDN-Übertragungssystem nach Anspruch 1,
dadurch gekennzeichnet,
daß für die Funkvermittiung kein spezieller Organisationskanal benutzt wird, sondern eine verteilte Vermittlung erfolgt, bei welcher in allen freien Kanälen Vermittlungs-, Organisations- und Signalisierungsprozeduren durchgeführt werden, und hierzu die nicht aktiven Teilnehmerfunkgeräte sich automatisch in einen der freien Nachrichtenkanäle positionieren und eine gleichmäßige Verteilung der Teilnehmerfunkgeräte auf die freien Nachrichtenkanäle dadurch gesichert wird, daß vor jedem Kanalwechsel im Teilnehmerfunkgerät eine Integer-Randomzahl n (beispielsweise 1≤ n ≤ 16) bestimmt wird, die angibt, der wievielte freie Kanal bei zyklischer Abtastung zu benutzen ist, und daß Kanalwechsel automatisch in Zeitabständen, auf Weisung der Funkvermittlungseinrichtung der Basisstation (BS) oder dann erfolgen, wenn der aktuell benutzte Kanal einem anderen Teilnehmerfunkgerät zur aktiven Nutzung zugewiesen wird.

8. Lokales ISDN-Übertragungssystem nach Anspruch 1 und 7,
dadurch gekennzeichnet,
daß die Funkvermittlungseinrichtung der Basisstation (BS) bei kommendem Ruf für einen Funkteilnehmer eine adressierte Abfrage auf allen freien Kanälen aussendet und dem Teilnehmerfunkgerät auf Grund seiner Quittung in der Regel den Nachrichtenkanal, in welchem es sich aktuell befindet, zur aktiven Nutzung zuweist.

9. Lokales ISDN-Übertragungssystem nach Anspruch 1 und 7,
dadurch gekennzeichnet,
daß die Funkvermittlungseinrichtung der Basisstation (BS) in den freien Kanälen, wenn keine anderen Vermittlungs- und Signalisierungsprozeduren durchzuführen sind, Kommandos "Freiruf' aussendet, die bei Wahlwunsch eines Funkteilnehmers (Aktivierungsanforderung eines angeschlossenen Endgerätes liegt vor) dem Teilnehmerfunkgerät erlauben, das Kommando "Wahlwunsch" auszusenden und die Basisstation (BS) dem Teilnehmerfunkgerät auf Grund seiner Anforderung in der Regel den Nachrichtenkanal, in welchem es sich aktuell befindet, zur aktiven Nutzung zuweist.

10. Lokales ISDN-Übertragungssystem nach Anspruch 1, 7 und 9,
dadurch gekennzeichnet,
daß im Teilnehmerfunkgerät nach einem Wahlwunsch, der von der Funkvermittlungseinrichtung nicht quittiert wird, eine Integer-Randomzahl n (beispielsweise 1≤ n ≤ 16) bestimmt wird, die angibt, der wievielte folgende Freiruf der Funkvermittlungseinrichtung für eine erneute Wahlwunschübertragung zu nutzen ist.

11. Lokales ISDN-Übertragungssystem nach Anspruch 1, 7, 8 und 9,
dadurch gekennzeichnet,
daß bei gleichzeitigem Vorliegen von kommender und gehender Verbindungsanforderung für zwei Teilnehmerfunkgeräte im gleichen Nachrichtenkanal oder gleichzeitigem Vorliegen von gehenden Verbindungsanforderungen zweier Teilnehmerfunkgeräte im gleichen Nachrichtenkanal die Funkvermittlungseinrichtung einem der Teilnehmerfunkgeräte einen anderen freien Nachrichtenkanlal zur aktiven Nutzung zuweisen kann.

12. Lokales ISDN-Übertragungssystem nach Anspruch 1, 6 und 7,
dadurch gekennzeichnet,
daß für die Datenübertragung zum Zwecke der Funkvermittlung Rahmenlänge, Übertragungsgeschwindigkeit und Synchronwort identisch zur ISDN-Übertragung auf der ISDN-Zweidraht-Teilnehmeranschlußleitung genutzt werden, und daß eine eindeutige Unterscheidung von Übertragungen zur Funkvermittlung und ISDN-Übertragungen dadurch erreicht wird, daß das Synchronwort (10.2) bei Übertragungen zur Funkvermittlung revers (Anfang und Ende vertauscht) in die Übertragung eingefügt wird.

13. Lokales ISDN-Übertragungssystem nach Anspruch 1 und 7,
dadurch gekennzeichnet,
daß die Funkvermittlungseinrichtung bei der Datenübertragung zum Zwecke der Funkvermittlung im Datenteil (10.5) der Datenrahmen die jeweils aktuelle Information über freie Kanäle überträgt, so daß Teilnehmerfunkgeräte zum Zwecke des Kanalwechsels ohne Suchlauf einen neuen Zielkanal bestimmen können.

## Claims

1. Local ISDN transmission system which is organized as a local radio cell consisting of a central radio base station and a plurality of distributed subscriber transceivers, and
is connected to the subscriber ports (ISDN basic accesses) of a
local exchange,
dependent exchange or
private branch exchange,
and provides the subscribers with access to the public ISDN telecommunications network via an S₀ interface by using a wireless transmission, and in which, for operating the system with a greater number of subscribers than the number of duplex radio channels used (hereinafter called communication channels), a central radio base station (BS) contains a radio switching facility which, in the event of an activation request (PH-ACTIVATE REQUEST) provides to the subscriber transceiver (TL), by means of a special radio switching process, any one of the existing and available communication channels for the communication,
characterized in that the net bit rate (B1 + B2 + D) of the ISDN subscriber line is transmitted unrestricted via the radio link and the S₀ interface represents an unrestricted interface,
that the ISDN two-wire subscriber line between the line termination (LT) in the ISDN switching centre and the network termination (NT) at the subscriber is subdivided into two sections by using a regenerative repeater (ZWR) and the transmission on wires is replaced by a radio transmission in the ZWR-NT section,
the regenerative repeater (ZWR) being a component of the base station (BS) of the local radio cell and the network termination (NT) being a component of the subscriber transceiver (TL) and both being integrated in such a manner that
in the event of an activation request (PH-ACTIVATE REQUEST), a communication channel is allocated within the working and monitoring times for activation of the ISDN two-wire subscriber line,
and that a facility is provided which, in the event of an activation request, delays forwarding of the latter by a delay time which makes it possible to switch a communication channel for the called subscriber and to activate radio facilities of the subscriber transceiver (TL).

2. Local ISDN transmission system according to Claim 1, characterized in that, for setting up a radio connection with an incoming call for a radio subscriber at the exchange-side (LT-side) input of the regenerative repeater (ZWR) (4.3, Fig. 4), the base station (BS) contains a facility (4.3, Fig. 4) which delays the ringing call (3.4, Fig. 3) originating from the exchange in the direction of the regenerative repeater (ZWR) and/or there is at the subscriber-side (NT-side) output of the regenerative repeater (ZWR) a facility (4.5, Fig. 4) which delays the ringing call (3.6, Fig. 4) originating from the regenerative repeater (ZWR) (4.4, Fig. 4) in the NT direction, and that these delay times are in each case used individually or in the aggregate for switching a communication channel for the called subscriber and for activating the radio facilities of the subscriber transceiver (TL).

3. Local ISDN transmission system according to Claim 1, characterized in that, in another variant, for setting up a radio connection with an incoming call for a radio subscriber, a facility (6.14) which delays the delivery of the activation request (6.6) to the output circuit (6.7) is inserted into the delivery interface in the base station (BS) between the LT-side input circuit (5.5/6.5) and subscriber-side output circuit (5.7/6.7) of the regenerative repeater (ZWR) (5.2/6.2), and that this delay time is used for switching a communication channel for the called subscriber and for activating the radio facilities of the subscriber transceiver.

4. Local ISDN transmission system according to Claim 1, characterized in that, for setting up a radio connection with an outgoing call of a radio subscriber, the subscriber transceiver contains at the subscriber-side S₀ connection (8.1) of the network termination (NT)(8.2) a facility which delays the activation request (INFOSI) of a connected terminal, and that this delay time is used for switching a communication channel for the called subscriber and for activating the radio facilities (8.8) of the subscriber transceiver (TL).

5. Local ISDN transmission system according to Claim 1, characterized in that, in another variant, for setting up a radio connection with an outgoing call of a radio subscriber, a facility (9.8) which delays the delivery of the activation request of a connected terminal is inserted into the delivery interface in the subscriber transceiver between the subscriber-side input circuit (9.4) and exchange-side output circuit (9.7) of the network termination (NT) (9.2), and that this delay time is used for switching a communication channel for the called subscriber and for activating the radio facilities (9.9) of the subscriber transceiver.

6. Local ISDN transmission system according to Claim 1, 2, 3, 4 and 5, characterized in that, after the delayed transmission of the activation requests, the radio transmission facility is switched transparently and on-line into the transmission path between exchange and terminal of the subscriber.

7. Local ISDN transmission system according to Claim 1, characterized in that no special control channel is used for the radio switching but the switching is distributed and switching, housekeeping and signalling procedures are carried out in all idle channels and, for this purpose, the inactive subscriber transceivers automatically position themselves in one of the idle communication channels and a uniform distribution of the subscriber transceivers to the idle communication channels is ensured by the fact that, before each change of channel, an integral random number n (for example 1 ≤ n ≤ 16), which specifies the ordinal number of the idle channel to be used with cyclic sampling, is determined in the subscriber transceiver, and that channel changes take place automatically at time intervals on instruction from the radio switching facility of the base station (BS) or when the currently used channel is allocated to another subscriber transceiver for active use.

8. Local ISDN transmission system according to Claim 1 and 7, characterized in that the radio switching facility of the base station (BS) with an incoming call for a radio subscriber, sends out an addressed query on all idle channels and, as a rule, allocates to the subscriber transceiver, on the basis of its acknowledgement, the communication channel in which it is currently located for active use.

9. Local ISDN transmission system according to Claim 1 and 7, characterized in that the radio switching facility of the base station (BS) sends out in the idle channels, when no other switching and signalling procedures need to be carried out, "clear call" commands which, in the event of a dialling request of a radio subscriber (activation request of a connected terminal is present), allow the subscriber transceiver to send out the command "dialling request" and the base station (BS), as a rule, allocates to the subscriber transceiver, on the basis of its request, the communication channel in which it is currently located for active use.

10. Local ISDN transmission system according to Claim 1, 7 and 9, characterized in that, in the subscriber transceiver, after a dialling request which is not acknowledged by the radio switching facility, an integral random number n (for example 1 ≤ n ≤ 16) is determined which specifies the ordinal number of the next clear call of the radio switching facility which is to be used for a repeated transmission of the dialling request.

11. Local ISDN transmission system according to Claim 1, 7, 8 and 9, characterized in that when an incoming and an outgoing connection request occurs simultaneously for two subscriber transceivers in the same communication channel or outgoing connection requests of two subscriber transceivers simultaneously occur in the same communication channel, the radio switching facility can allocate another idle communication channel for active use to one of the subscriber transceivers.

12. Local ISDN transmission system according to Claim 1, 6 and 7, characterized in that, if the data transmission is for the purpose of radio switching, frame length, transmission rate and synchronization word are identically used for ISDN transmission on the ISDN two-wire subscriber line, and that unambiguous distinction between transmissions for radio switching and ISDN transmissions is achieved by the synchronization word (10.2) being inserted inverted (exchanged start and end) into the transmission in the case of transmissions for radio switching.

13. Local ISDN transmission system according to Claim 1 and 7, characterized in that the radio switching facility, in the case of data transmission for the purpose of radio switching, transmits the in each case current information in the data section (10.5) of the data frames via idle channels so that subscriber transceivers can determine a new target channel for the purpose of changing the channel without a search procedure.

## Revendications

1. Système local de transmission par RNIS qui est organisé en cellule de radio locale constituée d'une station de radio fixe et d'une multiplicité de postes de radio d'abonnés décentralisés et qui est raccordé aux ports d'abonnés (raccordements de base RNIS)
d'un central local,
d'un standard de distribution ou
d'une installation de poste annexe
et qui permet aux abonnés d'accéder au réseau public de télécommunication RNIS à travers une interface S₀ par la mise en oeuvre d'une transmission sans fil,
et dans lequel on dispose d'une installation de liaison par radio pour l'exploitation du système avec un nombre d'abonnés supérieur au nombre de canaux de radio duplex utilisés (désignés par la suite comme canaux d'information) dans une station de radio fixe centrale (station de base BS), cette installation mettant un quelconque des canaux d'information disponibles et libres à la disposition du poste de radio de l'abonné (TL) pour la communication au moyen d'un procédé spécial de liaison par radio, en présence d'une demande d'activation (PH-ACTIVATE REQUEST),
caractérisé en ce que
le débit net en bits (B1 + B2 + D) du raccordement RNIS de l'abonné est transmis sans limitation à travers la liaison radio et l'interface S₀ représente une interface non limitée,
la liaison à deux fils du raccordement RNIS de l'abonné entre la terminaison de la ligne (LT) dans la liaison RNIS et la terminaison de réseau (NT) est subdivisée chez l'abonné en deux segments de ligne par la mise en oeuvre d'un régénérateur intermédiaire (ZWR)
et la transmission par fil est remplacée par une radiotransmission dans le segment de ligne ZWR - NT,
le régénérateur intermédiaire (ZWR) étant un constituant de la station de base (BS) de la cellule de radio locale
et la terminaison de réseau (NT) étant un constituant du poste de radio de l'abonné (TL)
et les deux étant intégrés de telle sorte,
que l'attribution d'un canal d'information ait lieu pendant les temps de carence et de surveillance pour l'activation de la liaison RNIS de raccordement à deux fils de l'abonné, en présence d'une demande d'activation (PH-ACTIVATE REQUEST),
et qu'une installation soit prévue qui, en présence d'une demande d'activation, retarde sa transmission d'un certain délai ce qui permet de commuter un canal d'information pour l'abonné appelé et d'activer les installations de radio du poste de radio de l'abonné (TL).

2. Système local de transmission par RNIS selon la revendication 1, caractérisé en ce que
dans la station de base (BS), on dispose d'une installation (4.3, figure 4) pour l'établissement d'une liaison par radio lors de l'arrivée d'un appel pour un abonné de la radio à l'entrée (côté LT), du côté de la liaison, du générateur intermédiaire (ZWR) (4.3, figure 4), cette installation retardant l'appel de réveil (3.4, figure 3) qui part du standard en direction du générateur intermédiaire (ZWR) et/ou on dispose d'une installation (4.5, figure 4) à la sortie (côté NT), du côté de l'abonné, du générateur intermédiaire (ZWR), cette installation retardant l'appel de réveil (3.6, figure 4) qui part du générateur intermédiaire (ZWR) (4.4, figure 4) en direction de la NT et en ce que ces délais sont respectivement utilisés individuellement ou additionnés pour commuter un canal d'information vers l'abonné appelé et pour activer les installations de radio du poste de radio de l'abonné (TL).

3. Système local de transmission par RNIS selon la revendication 1, caractérisé en ce que
dans une autre variante de la station de base (BS) se trouve insérée une installation (6.14) pour l'établissement d'une liaison par radio lors de l'arrivée d'un appel pour un abonné de la radio dans l'interface de transmission entre l'entrée (5.5/6.5) du côté LT et le circuit de sortie (5.7/6.7) du côté abonné du générateur intermédiaire (ZWR) (5.2/6.2), cette installation retardant la transmission de la demande d'activation (6.6) adressée au circuit de sortie (6.7), et en ce que ce délai est utilisé pour commuter un canal d'information pour l'abonné appelé et pour activer les installations de radio du poste de radio de l'abonné.

4. Système local de transmission par RNIS selon la revendication 1, caractérisé
en ce qu'on dispose d'une installation pour l'établissement d'une liaison par radio lors du déroulement d'un appel d'un abonné de la radio dans le poste de radio de l'abonné au raccordement S₀ (8.1) du côté abonné de la terminaison de réseau (NT) (8.2), cette installation retardant la demande d'activation (INFOSI) d'un appareil terminal qui est raccordé, et en ce que ce délai est utilisé pour commuter un canal d'information pour l'abonné appelé et pour activer les installations de radio (8.8) du poste de radio de l'abonné (TL).

5. Système local de transmission par RNIS selon la revendication 1, caractérisé en ce que
dans une autre variante, se trouve insérée une installation (9.8) pour l'établissement d'une liaison par radio lors du déroulement d'un appel d'un abonné de la radio dans le poste de radio de l'abonné dans l'interface de transmission entre le circuit d'entrée (9.4) du côté abonné et le circuit de sortie (9.7) du côté de la liaison de la terminaison de réseau (NT) (9.2), cette installation retardant la transmission de la demande d'activation d'un appareil terminal qui est raccordé, et en ce que ce délai est utilisé pour commuter un canal d'information pour l'abonné appelé et pour activer les installations de radio (9.9) du poste de radio de l'abonné.

6. Système local de transmission par RNIS selon les revendications 1, 2, 3, 4 et 5, caractérisé en ce que
l'installation de radiotransmission est branchée de manière transparente et en ligne dans la voie de transmission entre la liaison et le poste terminal de l'abonné après la transmission retardée des demandes d'activation.

7. Système local de transmission par RNIS selon la revendication 1, caractérisé
en ce qu'on n'utilise pas de canal d'organisation spécial pour l'établissement de la liaison par radio, mais par contre qu'il s'établit une liaison partagée dans laquelle les procédures de liaison, d'organisation et de signalisation sont exécutées dans tous les canaux libres et à cet effet, les postes de radio non actifs des abonnés se positionnent automatiquement dans l'un des canaux d'information libres, et une répartition régulière des postes de radio des abonnés dans les canaux d'information libres est garantie par le fait qu'avant chaque changement de canal, on définit dans le poste de radio de l'abonné, un nombre entier aléatoire n (par exemple 1 ≤ n ≤ 16) qui indique le combientième canal libre il faudra utiliser par scrutation cyclique, et par le fait que le changement de canal a lieu automatiquement à des intervalles de temps sur ordre de l'installation de liaison par radio de la station de base (BS) ou lorsque le canal en cours d'utilisation est attribué à un autre poste de radio d'abonné pour une utilisation active.

8. Système local de transmission par RNIS selon les revendications 1 et 7, caractérisé en ce que
l'installation de liaison par radio de la station de base (BS) émet une demande adressée à tous les canaux libres lors de l'arrivée d'un appel pour un abonné de la radio et elle attribue en règle générale au poste de radio de l'abonné, sur la base de son acquittement, le canal d'information dans lequel il se trouve actuellement pour son utilisation active.

9. Système local de transmission par RNIS selon les revendications 1 et 7, caractérisé en ce que
l'installation de liaison par radio de la station de base (BS) émet des commandes d"'appel libre" dans les canaux libres lorsqu'aucune autre procédure de liaison et de signalisation ne doit être exécutée, ces commandes permettant au poste de radio de l'abonné d'émettre la commande "demande de sélection" lors de la demande de sélection d'un abonné de la radio (il existe une demande d'activation d'un poste terminal qui est raccordé), et la station de base (BS) attribue en règle générale au poste de radio de l'abonné, sur la base de sa demande, le canal d'information dans lequel il se trouve actuellement pour son utilisation active.

10. Système local de transmission par RNIS selon les revendications 1, 7 et 9, caractérisé en ce que
après une demande de sélection qui n'est pas acquittée par l'installation de liaison par radio, on définit dans le poste de radio de l'abonné, un nombre aléatoire entier n (par exemple 1 ≤ n ≤ 16) qui indique le combientième appel libre successif de l'installation de liaison par radio il faudra utiliser pour une nouvelle transmission de la demande de sélection.

11. Système local de transmission par RNIS selon les revendications 1, 7, 8 et 9, caractérisé en ce que
l'installation de liaison par radio peut attribuer un autre canal d'information libre à l'un des postes de radio de l'abonné pour son utilisation active lors de l'existence simultanée de demande de liaison arrivante ou partante pour deux postes de radio d'abonné dans le même canal d'information ou lors de l'existence simultanée de demandes de liaison partantes de deux postes de radio d'abonné dans le même canal d'information.

12. Système local de transmission par RNIS selon les revendications 1, 6 et 7, caractérisé en ce que
la transmission de données sur la liaison RNIS à deux fils du raccordement de l'abonné pour la transmission par radio de la longueur de trame, de la vitesse de transmission et du mot de synchronisation est utilisée de manière identique à la transmission RNIS, et en ce
qu'une distinction claire entre transmissions pour liaison par radio et transmissions RNIS est obtenue par le fait que le mot de synchronisation (10.2) est inséré inversé (le début et la fin sont permutés) dans la transmission lors de transmissions vers la liaison par radio.

13. Système local de transmission par RNIS selon les revendications 1 et 7, caractérisé en ce que
l'installation de liaison par radio lors de la transmission de données pour la transmission par radio dans la zone des données (10.5) des trames de données achemine respectivement les informations courantes sur les canaux libres, de sorte que les postes de radio des abonnés peuvent définir sans recherche un nouveau canal cible en vue du changement de canal.
